# EUROPEAN PATENT APPLICATION

(11) **EP 1 499 028 A1**
(43) Date of publication of application: **19.01.2005**
(21) Application number: 03720934.3
(22) Date of filing: 18.04.2003
(51) Int. Cl.: H04B 1/40

(54) **MOBILE COMMUNICATION DEVICE**

(30) Priority: 25.04.2002 JP 2002124366
(71) Applicant: MATSUSHITA ELECTRIC INDUSTRIAL CO., LTD., Kadoma-shi, Osaka 571-8501 (JP)
(72) Inventor: TANIZAKI, Takahiro Room 202, Esupowaru Kamoi, Yokohama-shi, Kanagawa 226-0003 (JP); SHIMADA, Hajime, Shinagawa-ku, Tokyo 142-0061 (JP); SAKAMOTO, Koichi Room 305, Eregansu Hiyoshi, Yokohama-shi, Kanagawa 223-0061 (JP); MOCHIZUKI, Makoto, Kamakura-shi, Kanagawa 247-0074 (JP)
(74) Representative: Grünecker, Kinkeldey, Stockmair & Schwanhäusser Anwaltssozietät
(86) International application number: PCT/JP2003/005003
(87) International publication number: WO 2003/092181

(57) **Abstract**

An object of the invention is, in a mobile communication apparatus allowing to perform a transmission/reception simultaneous operation, and in a case that transmission/reception is performed by packet communication or the like, to improve reception sensitivity at a timing when only a reception processing is performed and to improve transmission distortion characteristics at a timing when only a transmission processing is performed. In the mobile communication apparatus of the invention, an antenna switching unit (16) is connected to an antenna (11). The antenna switching unit (16) includes switches (21), (22), (23) and (24), and in a case that a transmission/reception simultaneous operation is performed by packet communication or the like, a transmission side filter (12) and a reception side filter (14) constituting an antenna switching unit are connected to the antenna (11). At a timing when there is no transmission signal, a transmission system is disconnected from the antenna (11) by the switches (21) and (23), and the degradation of the reception sensitivity is prevented. Besides, at a timing when there is no reception signal, a reception system is disconnected from the antenna (11) by the switch (22), and the degradation of the transmission distortion characteristics is prevented.

## Description

### TECHNICAL FIELD

The present invention relates to a mobile communication apparatus which can perform a transmission/reception simultaneous operation, and particularly to a structure of an antenna switching part for switching and connecting an antenna to a transmission system and a reception system.

### BACKGROUND ART

In a mobile communication system using a cellular phone or the like as a mobile station terminal, in addition to a voice phone call, data communication by packet communication and the like are enabled. As cable-free packet communication, in recent years, it is proposed to improve a data transfer rate by enabling transmission and reception at the same time. Then, as a portable mobile communication apparatus which can be used for such a mobile communication system, one which supports a transmission/reception simultaneous operation is requested from the market.

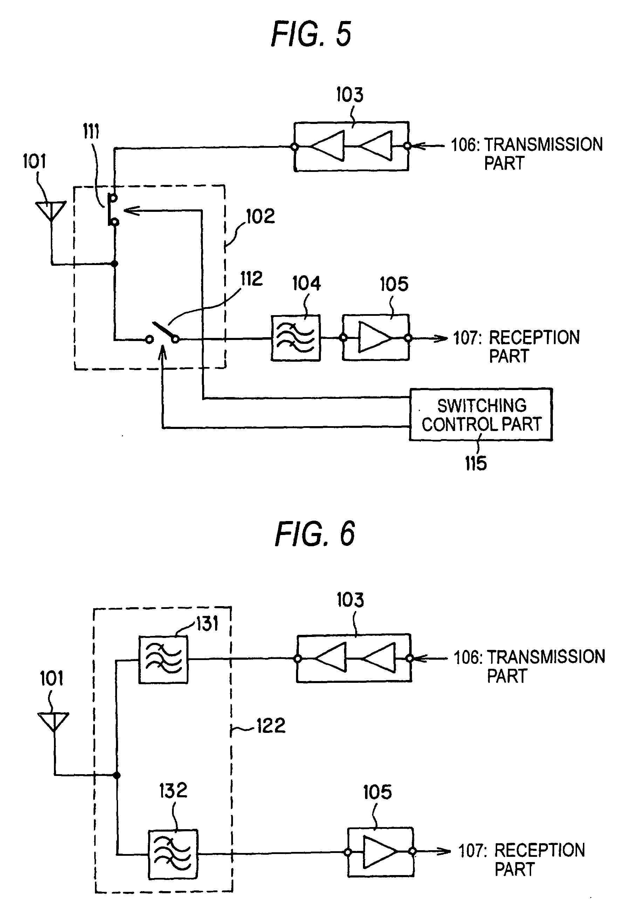

In a mobile communication apparatus which does not perform transmission and reception at the same time, since a transmission system has little influence on a reception system, degradation of reception sensitivity due to a transmission wave does not have to be considered, and an antenna sharing unit including filters is not required. Accordingly, in the mobile communication apparatus which does not support the transmission/reception simultaneous operation, as shown in Fig. 5, a structure is generally adopted in which an antenna sharing unit is not provided, but only an antenna switching unit 102 is provided.

The mobile communication apparatus not supporting the transmission/reception simultaneous operation and shown in Fig. 5 has such a structure that the antenna switching unit 102 for switching between a transmission system and a reception system is connected to an antenna 101, and a filter is not provided. In the antenna switching unit 102, a transmission side switch 111 is connected to a transmitting power amplifier 103 and is connected to a transmission part 106. Besides, a reception side switch 112 is connected to a reception side filter 104 for removing an interfering wave and a receiving amplifier 105 in sequence, and is connected to a reception part 107. Besides, there is provided a switching control part 115 for performing connection switching control of the switches 111 and 112 of the antenna switching unit 102.

In this structure, the switches 111 and 112 of the antenna switching unit 102 are switched by the switching control part 115, and the antenna 101 is connected to either one of the transmission system and the reception system. For example, in the case where only transmission is performed at the time of a voice phone call or the like, the switch 111 is connected, and the switch 112 becomes unconnected. In the case where only reception is performed at the time of a voice phone call or the like, the switch 111 becomes unconnected, and the switch 112 is connected. The switching control of the switches 111 and 112 is performed by control signals from the switching control part 115.

On the other hand, in a mobile communication apparatus supporting a transmission/reception simultaneous operation, there occurs a state in which a transmission system and a reception system use the same antennal at the same time, and the transmission system has a large influence on the reception system, and therefore, when the transmission system and the reception system are simply connected to the antenna, reception becomes impossible. Thus, in the mobile communication apparatus supporting the transmission/reception simultaneous operation, an antenna sharing unit including filters at the transmission side and the reception side is required, and a structure in which an antenna sharing unit 122 is provided as shown in Fig. 6 is generally used.

The mobile communication apparatus supporting the transmission/reception simultaneous operation shown in Fig. 6 has such a structure that the antenna sharing unit 122 including a transmission side filter 131 and a reception side filter 132 is connected to an antenna 101. The transmission side filter 131 of the antenna sharing unit 122 is connected to a transmitting power amplifier 103 and is connected to a transmission part 106. The reception side filter 132 is connected to a receiving amplifier 105 and is connected to a reception part 107. In this structure, the antenna 101 is always connected to the transmission system and the reception system, and the simultaneous operation of transmission and reception is enabled. At this time, a transmission signal from the transmission part 106 is cut off by the reception side filter 132 and is not inputted to the reception system, and a reception signal from the antenna 101 is cut off by the transmission side filter 131 and is not inputted to the transmission system.

In the mobile communication apparatus supporting the transmission/reception simultaneous operation as stated above, in the case where the transmission/reception simultaneous operation is performed by packet communication or the like, since there occurs a state in which the reception system and the transmission system are connected, a shift occurs in the input impedance of the reception system by the influence of the output impedance of the transmission system, and there has been a fear that reception sensitivity is degraded. Besides, in this case, a shift occurs in the output impedance of the transmission system by the influence of the input impedance of the reception system, and there has been a fear that distortion characteristics are degraded.

The present invention has been made in view of the above circumstances, and an object thereof is to provide a mobile communication apparatus in which in a mobile communication apparatus being able to perform a transmission/reception simultaneous operation, in a case where transmission/reception is performed by packet communication or the like, the degradation of reception sensitivity at a timing when there is no transmission signal is prevented, and the reception sensitivity can be improved.

Besides, another object thereof is to provide a mobile communication apparatus in which in a mobile communication apparatus being able to perform a transmission/reception simultaneous operation, in a case where transmission/reception is performed by packet communication or the like, the degradation of transmission distortion characteristics at a timing when there is no reception signal is prevented, and the transmission distortion characteristics can be improved.

### DISCLOSURE OF THE INVENTION

A mobile communication apparatus according to a first structure of the invention is a mobile communication apparatus, including a transmission system for processing a transmission signal, a reception system for processing a reception signal, and an antenna connected to the transmission system and the reception system, and allowing to perform a transmission/reception simultaneous operation. The mobile communication apparatus comprises an antenna switch, which disconnects the transmission system from the antenna during a period when only a reception is performed in a case that the transmission/reception simultaneous operation is performed by the transmission system and the reception system.

According to the above structure, when the transmission/reception simultaneous operation is performed, for example, in the case where packet communication is performed, as the period in which only the reception is performed, at the timing when there is no transmission signal, such as the time when full slot transmission is not performed, the transmission system is disconnected from the antenna by the antenna switch, so that the transmission system and the reception system can be separated, and it becomes possible to prevent the reception sensitivity from being degraded by the influence of the output impedance of the transmission system. Besides, for example, at the timing when there is no transmission signal and only the reception processing is performed, and in a period in which there is no reception information in the reception signal, the transmission system is disconnected from the antenna, so that it becomes possible to prevent the corruption of the reception information due to instantaneous impedance variation occurring at the switching timing of the antenna.

A mobile communication apparatus according to a second structure of the invention is a mobile communication apparatus including a transmission system for processing a transmission signal, a reception system for processing a reception signal, and an antenna connected to the transmission system and the reception system, and allowing to perform a transmission/reception simultaneous operation. The mobile communication apparatus includes an antenna switch, which disconnects the reception system from the antenna during a period when only a transmission is performed in a case that the transmission/reception simultaneous operation is performed by the transmission system and the reception system.

According to the above structure, when the transmission/reception simultaneous operation is performed, for example, in the case where packet communication is performed, as the period in which only the transmission is performed, at the timing when there is no reception signal, such as the time when full slot reception is not performed, the reception system is disconnected from the antenna by the antenna switch, so that the transmission system and the reception system can be separated, and it becomes possible to prevent the transmission distortion characteristics from being degraded by the influence of the input impedance of the reception system. Besides, for example, at the timing when there is no reception signal and only the transmission processing is performed, and in a period in which there is no transmission information in the transmission signal, the reception system is disconnected from the antenna, so that it becomes possible to prevent the corruption of the transmission information due to instantaneous impedance variation occurring at the switching timing of the antenna.

Besides, the first structure is characterized in that the antenna switch includes a first switch, which connects the antenna to the transmission system in a case that a transmission operation is performed, a second switch, which connects the antenna to a filter constituting a reception side antenna sharing unit in the reception system in a case that a reception operation is performed and in the case that the transmission/reception operation is performed, and a third switch, which connects a filter constituting a transmission side antenna sharing unit between the antenna and the transmission system in the case that the transmission/reception operation is performed. The first switch and the third switch are disconnected during the period when only the reception is performed in the case that the transmission/reception simultaneous operation is performed.

According to the above structure, when the transmission/reception simultaneous operation is performed, for example, in the case where the packet communication is performed, the first and the third switches are opened in the period in which only the reception is performed, so that the transmission system is disconnected from the antenna, and the transmission system and the reception system can be separated, and it becomes possible to prevent the degradation of reception sensitivity due to the influence of the output impedance of the transmission system.

Besides, the first structure is characterized in that the antenna switch includes a first switch, which connects the antenna to a filter constituting a transmission side antenna sharing unit in the transmission system in a case that a transmission operation is performed and in the case that the transmission/reception operation is performed, and a second switch, which connects the antenna to a filter constituting a reception side antenna sharing unit in the reception system in a case that a reception operation is performed and in the case where the transmission/reception operation is performed. The first switch is disconnected during the period when only the reception is performed in the case that the transmission/reception simultaneous operation is performed.

According to the above structure, when the transmission/reception simultaneous operation is performed, for example, in the case where the packet communication is performed, the first switch is opened in the period in which only the reception is performed, so that the transmission system is disconnected from the antenna, and the transmission system and the reception system can be separated, and it becomes possible to prevent the degradation of reception sensitivity due to the influence of the output impedance of the transmission system.

Besides, the second structure is characterized in that the antenna switch includes a first switch, which connects the antenna to the transmission system in a case that a transmission operation is performed, a second switch, which connects the antenna to a filter constituting a reception side antenna sharing unit in the reception system in a case that a reception operation is performed and in the case that the transmission/reception operation is performed, and a third switch, which connects a filter constituting a transmission side antenna sharing unit between the antenna and the transmission system in the case that the transmission/reception operation is performed. The second switch is disconnected during the period when only the transmission is performed in the case that the transmission/reception simultaneous operation is performed.

According to the above structure, when the transmission/reception simultaneous operation is performed, for example, in the case where the packet communication is performed, the second switch is opened in the period in which only the transmission is performed, so that the reception system is disconnected from the antenna, and the transmission system and the reception system can be separated, and it becomes possible to prevent the degradation of transmission distortion characteristics due to the influence of the input impedance of the transmission system.

Besides, the second structure is characterized in that the antenna switch includes a first switch, which connects the antenna to a filter constituting a transmission side antenna sharing unit in the transmission system in a case that a transmission operation is performed and in the case that the transmission/reception operation is performed, and a second switch, which connects the antenna to a filter constituting a reception side antenna sharing unit in the reception system in a case that a reception operation is performed and in the case that the transmission/reception operation is performed. The second switch is disconnected during the period when only the transmission is performed in the case that the transmission/reception simultaneous operation is performed.

According to the above structure, when the transmission/reception simultaneous operation is performed, for example, in the case where the packet communication is performed, the second switch is opened in the period in which only the transmission is performed, so that the reception system is disconnected from the antenna, and the transmission system and the reception system can be separated, and it becomes possible to prevent the degradation of transmission distortion characteristics due to the influence of the input impedance of the reception system.

### BRIEF DESCRIPTION OF THE DRAWINGS

Fig. 1 is a block diagram showing a structure of a main part of a mobile communication apparatus according to a first and a second embodiments;
Fig. 2 is an operation explanatory view showing an antenna switching operation of a mobile communication apparatus according to the first and a third embodiments of the invention;
Fig. 3 is an operation explanatory view showing an antenna switching operation of a mobile communication apparatus according to the second and a fourth embodiments of the invention;
Fig. 4 is a block diagram showing a structure of a main part of the mobile communication apparatus according to the third and the fourth embodiments;
Fig. 5 is a block diagram showing a structural example of a mobile communication apparatus not supporting a transmission/reception simultaneous operation; and
Fig. 6 is a block diagram showing a structural example of a mobile communication apparatus supporting a transmission/reception simultaneous operation.

Incidentally, with respect to symbols in the drawing, 11 denotes an antenna; 12, a transmission side filter (antenna sharing unit); 13, a transmitting power amplifier; 14, a reception side filter (antenna sharing unit); 15, a receiving amplifier; 16, 31, an antenna switching unit; 17, a transmission part; 18, a reception part; 19, 32, a switching control part; and 21, 22, 23, 24, 41, 42; a switch.

### BEST MODE FOR CARRYING OUT THE INVENTION

Hereinafter, embodiments of the present invention will be described with reference to the drawings.

### First Embodiment

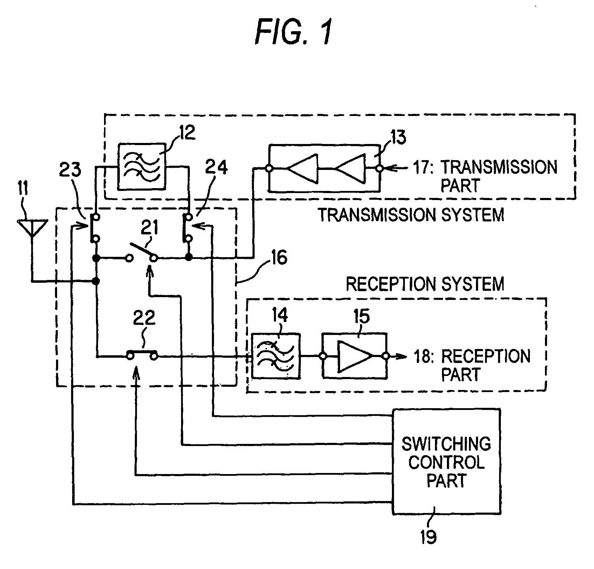

Fig. 1 is a block diagram showing a structure of a main part of a mobile communication apparatus according to a first embodiment.

In this embodiment, a structure of a connection part between a transmission/reception part of a cellular phone used as a mobile station terminal of a mobile communication system and an antenna is shown as an example of the mobile communication apparatus of the invention. The mobile communication apparatus of this embodiment supports packet communication in a TDMA (Time Division Multiple Access) system, and is constructed to enable a transmission/reception simultaneous operation.

As shown in Fig. 1, the mobile communication apparatus of the first embodiment is provided with an antenna 11 for performing transmission and reception of a radio signal, and an antenna switching unit 16 for switching the connection of the antenna 11 is connected. A transmission side filter 12 constituting an antenna sharing unit and for cutting off a reception signal, and a transmitting power amplifier 13 for amplifying a transmission signal are connected in sequence to a transmission side of the antenna switching unit 16, and are connected to a transmission part 17. A reception side filter 14 constituting the antenna sharing unit and for cutting off a reception interfering wave and a transmission signal, and a receiving amplifier 15 for amplifying a reception signal are connected in sequence to a reception side of the antenna switching unit 16, and is connected to a reception part 18.

The antenna switching unit 16 includes a switch 21 for connecting the antenna 11 to the transmitting power amplifier 13 in a case where only transmission is performed in a voice phone call or the like, a switch 22 for connecting the antenna 11 to the reception side filter 14 in a case where only reception is performed in the voice phone call or the like and in a case where transmission/reception is performed by packet communication or the like, and switches 23 and 24 for connecting the transmission side filter 12 between the antenna 11 and the transmitting power amplifier 13 in the case where the transmission/reception is performed by the packet communication or the like. Besides, there is provided a switching control part 19 for performing switching control of connection and unconnection of the switches 21, 22, 23 and 24 of the antenna switching unit 16. The switching control of the switches 21 to 24 is performed by control signals from the switching control part 19 irrespective of interlocking or non-interlocking.

Next, a description will be given to the operation of the mobile communication apparatus of this embodiment, mainly to the operation of the antenna switching unit 16.

In the case where a voice phone call or the like is made, and at a timing when only transmission is performed, only the switch 21 of the antenna switching unit 16 is connected. At this time, a transmission signal outputted from the transmission part 17 is amplified by the transmitting power amplifier 13, and is transmitted and outputted to a not-shown base station from the antenna 11 through the switch 21 of the antenna switching unit 16, not through the transmission side filter 12.

In the case where a voice phone call is made, and at a timing when only reception is performed, only the switch 22 of the antenna switching unit 16 is connected. At this time, a reception signal received by the antenna 11 is inputted to the reception side filter 14 through the switch 22 of the antenna switching unit 16, and after an interfering wave is removed by the reception side filter 14, the signal is amplified by the receiving amplifier 15 and is inputted to the reception part 18, and a reception processing such as demodulation is performed.

In the case where packet communication is performed in the TDMA system, a transmission system and a reception system are made to operate at the same time. Especially, in the case where full slot packet communication to transmit packet data by using all usable time slots is performed, a transmission slot and a reception slot temporally overlap with each other, and a transmission/reception simultaneous operation state occurs. In this case, the switches 22, 23 and 24 of the antenna switching unit 16 are connected, so that there occurs a state in which the antenna switching unit including the transmission side filter 12 and the reception side filter 14 is connected to the antenna 11, and both the transmission system and the reception system are connected to the antenna 11 through the antenna sharing unit.

At this time, a transmission signal outputted from the transmission part 17 is amplified by the transmitting power amplifier 13, and is transmitted and outputted to the not-shown base station from the antenna 11 through the switch 24 of the antenna switching unit 16, the transmission side filter 12, and the switch 23 of the antenna switching unit 16. Here, the impedance of the reception system viewed from the transmission side is almost infinite by the reception side filter 14, and the transmission signal is cut off by the reception side filter 14 and does not flow to the reception system. Besides, a reception signal received by the antenna 11 is amplified by the receiving amplifier 15 after an interfering wave is removed by the reception side filter 14 through the switch 22 of the antenna switching unit 16 and the reception side filter 14, and is inputted to the reception part 18, and a reception processing such as demodulation is performed. Here, the impedance of the transmission system viewed from the reception side is almost infinite by the transmission side filter 12, and the reception signal is cut off by the transmission side filter 12 and does not flow to the transmission system.

In the case where the transmission/reception simultaneous operation as described above is performed, when the antenna sharing unit is merely provided, there occurs a state in which the reception system and the transmission system are always connected, and therefore, a shift occurs in the input impedance of the reception system by the influence of the output impedance of the transmission system, and there is a fear that the reception sensitivity is degraded.

Then, in this embodiment, also at the time of the transmission/reception simultaneous operation such as the time of the packet communication, for example, when full slot transmission is not performed, there is a timing when a transmission signal does not exist, and therefore, in a period in which only such a reception processing is performed, the transmission system is made unconnected by the antenna switching unit 16, and the transmission system and the reception system are separated. Specifically, in the period in which there is no transmission signal, a switching control signal is sent to the antenna switching unit 16 from the switching control part 19, and the switches 21 and 23 of the antenna switching unit 16 are made unconnected. By this, the transmission system and the reception system can be separated, the degradation of the reception sensitivity in the period in which there is no transmission signal is prevented, and telephone call quality can be secured.

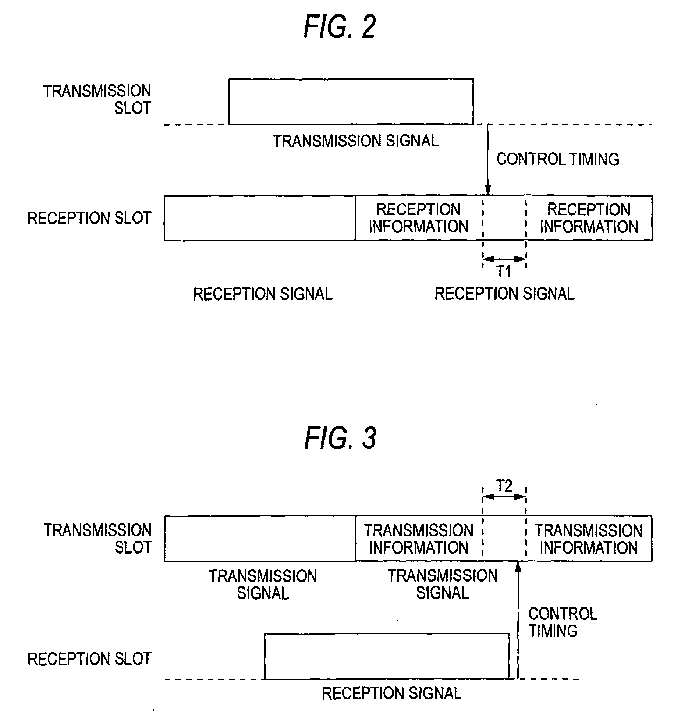

Fig. 2 is an operation explanatory view showing an antenna switching operation of the mobile communication apparatus according to the first embodiment of the invention, and shows an example of the switching control timing of the antenna in a period in which there is no transmission signal. This drawing shows timings of a transmission signal and a reception signal in respective ones of a transmission slot and a reception slot, and a control timing of connection switching of the antenna switching unit 16.

As shown in Fig. 2, at the timing when there is no transmission signal and only the reception processing is performed, and at the control timing in a period T1 in which there is no reception information in the reception signal, the switches 21 and 23 of the antenna switching unit 16 are opened to make the transmission system unconnected. By this, it becomes possible to prevent the corruption of the reception information due to instantaneous impedance variation occurring at the switching timing of the antenna.

As stated above, in this embodiment, at the time when the transmission/reception simultaneous operation is performed, such as the time of the packet communication, and for example, in the case where full slot transmission is not performed, the transmission system is disconnected from the antenna at the timing when there is no transmission signal, so that the transmission system and the reception system can be separated, and the degradation of the reception sensitivity can be prevented. By this, as compared with the case where the transmission system and the reception system are connected, for example, the reception sensitivity can be improved by about 1 dB.

### Second Embodiment

A second embodiment shows an example of switching control of an antenna at a timing when there is no reception signal in the structure of the first embodiment.

As described above, in the case where the packet communication is performed in the TDMA system, the transmission system and the reception system are operated at the same time. Especially, in the case where the full slot packet communication to transmit packet data by using all usable time slots is performed, the transmission slot and the reception slot temporally overlap with each other, and the transmission/reception simultaneous operation state occurs. At this time, the switches 22, 23 and 24 of the antenna switching unit 16 are connected, so that there occurs a state in which the antenna sharing unit including the transmission side filter 12 and the reception side filter 14 is connected to the antenna 11, and both the transmission system and the reception system are connected to the antenna 11 through the antenna sharing unit.

In the case where the transmission/reception simultaneous operation as stated above is performed, when the antenna sharing unit is merely provided, there occurs a state where the reception system and the transmission system are always connected, and therefore, a sift occurs in the output impedance of the transmission system by the influence of the input impedance of the reception system, and there is a fear that transmission distortion characteristics are degraded.

Then, in this embodiment, also at the time of the transmission/reception simultaneous operation such as the time of the packet communication, for example, when full slot reception is not performed, there is a timing when a reception signal does not exist, and therefore, in the period in which only such a transmission processing is performed, the reception system is made unconnected by the antenna switching unit 16, and the transmission system and the reception system are separated. Specifically, in the period of the timing when there is no reception signal, a switching control signal is sent to the antenna switching unit 16 from the switching control part 19, and the switch 22 of the antenna switching unit 16 is made unconnected. By this, the transmission system and the reception system can be separated, the degradation of transmission distortion characteristics in the period in which there is no reception signal is prevented, and the quality of a telephone call can be secured.

Fig. 3 is an operation explanatory view showing an antenna switching operation of the mobile communication apparatus according to the second embodiment of the invention, and shows an example of the switching control timing of the antenna in the period in which there is no reception signal. This drawing shows timings of a transmission signal and a reception signal in respective ones of a transmission slot and a reception slot, and a control timing of connection switching of the antenna switching unit 16.

As shown in Fig. 3, at the timing when there is no reception signal and only the transmission processing is performed, and at a control timing in a period T2 in which there is no transmission information in the transmission signal, the switch 22 of the antenna switching unit 16 is opened to make the reception system connected. By this, it becomes possible to prevent the corruption of the transmission information due to instantaneous impedance variation occurring at the switching timing of the antenna.

As stated above, in this embodiment, at the time when the transmission/reception simultaneous operation is performed, such as the time of the packet communication, and for example, in the case where full slot reception is not performed, the reception system is disconnected from the antenna at the timing when there is no reception signal, so that the transmission system and the reception system can be separated, and the degradation of the transmission distortion characteristics can be suppressed. By this, as compared with the case where the transmission system and the reception system are connected, for example, adjacent channel leakage power can be improved by about 0.5 dB.

### Third Embodiment

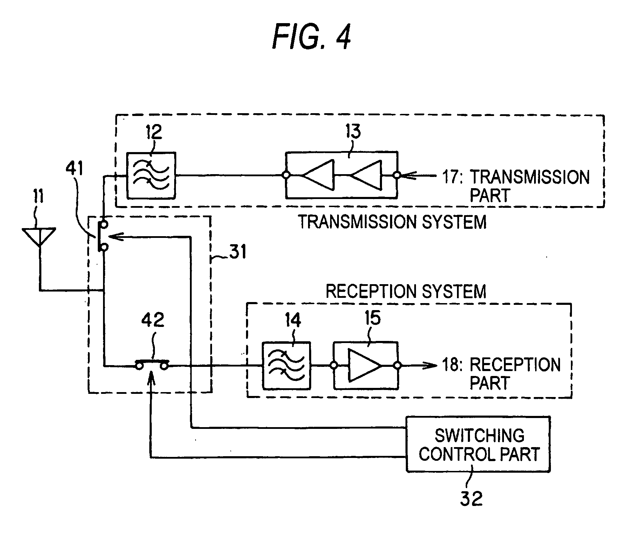

Fig. 4 is a block diagram showing a structure of a main part of a mobile communication apparatus according to a third embodiment of the invention.

As shown in Fig. 4, the mobile communication apparatus of the third embodiment is provided with an antenna 11 for performing transmission and reception of a radio signal, and an antenna switching unit 31 for switching the connection of this antenna 11 is connected. A transmission side filter 12 constituting an antenna sharing unit and for cutting off a reception signal and a transmitting power amplifier 13 for amplifying a transmission signal are connected in sequence to a transmission side of the antenna switching unit 31, and are connected to a transmission part 17. A reception side filter 14 constituting the antenna sharing unit and for cutting off a reception interfering wave and a transmission signal, and a receiving amplifier 15 for amplifying a reception signal are connected in sequence to a reception side of the antenna switching unit 31, and are connected to a reception part 18.

The antenna switching unit 31 includes a switch 41 for connecting the antenna 11 to the transmission side filter 12 in a case where only transmission is performed by a voice phone call or the like and in a case where transmission/reception is performed by packet communication or the like, and a switch 42 for connecting the antenna 11 to the reception side filter 14 in a case where only reception is performed by the voice phone call or the like and in the case where the transmission/reception is performed by the packet communication or the like. Besides, there is provided a switching control part 32 for performing switching control of connection and unconnection of the switches 41 and 42 of the antenna switching unit 31. The switching control of the switches 41 and 42 is performed by control signals from the switching control part 32 irrespective of interlocking or non-interlocking.

Next, a description will be given to the operation of the mobile communication apparatus of this embodiment, mainly to the operation of the antenna switching unit 31.

In the case where a voice phone call is made, and at a timing when only transmission is performed, only the switch 41 of the antenna switching unit 31 is connected. At this time, a transmission signal outputted from the transmission part 17 is amplified by the transmitting power amplifier 13, and is transmitted and outputted to a not-shown base station from the antenna 11 through the transmission side filter 12 and the switch 41 of the antenna switching unit 31.

In the case where the voice phone call is performed, and at a timing when only reception is performed, only the switch 42 of the antenna switching unit 31 is connected. At this time, a reception signal received by the antenna 11 is inputted to the reception side filter 14 through the switch 42 of the antenna switching unit 31, and after an interfering wave is removed by the reception side filter 14, the signal is amplified by the receiving amplifier 15 and is inputted to the reception part 18, and a reception processing such as demodulation is performed.

In the case where packet communication is performed in the TDMA system, a transmission system and a reception system are made to operate at the same time. Especially, in the case where full slot packet communication to transmit packet data by using all usable time slots is performed, a transmission slot and a reception slot temporally overlap with each other, and a transmission/reception simultaneous operation state occurs. In this case, the switches 41 and 42 of the antenna switching unit 31 are connected, so that there occurs a state in which the antenna sharing unit including the transmission side filter 12 and the reception side filter 14 is connected to the antenna 11, and both the transmission system and the reception system are connected to the antenna 11 through the antenna sharing unit.

At this time, a transmission signal outputted from the transmission part 17 is amplified by the transmitting power amplifier 13, and is transmitted and outputted to the not-shown base station from the antenna 11 through the transmission side filter 12 and the switch 41 of the antenna switching unit 31. Here, the impedance of the reception system viewed from the transmission side is almost infinite by the reception side filter 14, and the transmission signal is cut off by the reception side filter 14 and does not flow to the reception system. A reception signal received by the antenna 11 is amplified by the receiving amplifier 15 after an interfering wave is removed by the reception side filter 14 through the switch 42 of the antenna switching unit 31 and the reception side filter 14, and is inputted to the reception part 18, and a reception processing such as demodulation is performed. Here, the impedance of the transmission system viewed from the reception side is almost infinite by the transmission side filter 12, and the reception signal is cut off by the transmission side filter 12 and does not flow to the transmission system.

In the case where the transmission/reception simultaneous operation as stated above is performed, when the antenna sharing unit is merely provided, there occurs a state where the reception system and the transmission system are always connected, and accordingly, a shift occurs in the input impedance of the reception system by the influence of the output impedance of the transmission system, and there is a fear that the reception sensitivity is degraded.

Then, in this embodiment, similarly to the first embodiment, also at the time of the transmission/reception simultaneous operation such as the time of the packet communication, for example, when full slot transmission is not performed, there is a timing when a transmission signal does not exist, and therefore, in the period in which only such a reception processing is performed, the transmission system is made unconnected by the antenna switching unit 31 to separate the transmission system and the reception system. Specifically, in the period of the timing when there is no transmission signal, a switching control signal is sent to the antenna switching unit 31 from the switching control part 32, and the switch 41 of the antenna switching unit 31 is made unconnected. By this, the transmission system and the reception system can be separated, and the degradation of the reception sensitivity in the period in which there is no transmission signal is prevented.

Besides, as shown in Fig. 2, similarly to the first embodiment, at the timing when there is no transmission signal and only the reception processing is performed, and at the control timing in the period T1 in which there is no reception information in the reception signal, the switch 41 of the antenna switching unit 31 is opened, and the transmission system is made unconnected. By this, it becomes possible to prevent the corruption of the reception information due to instantaneous impedance variation occurring at the switching timing of the antenna.

As stated above, in this embodiment, similarly to the first embodiment, at the time when the transmission/reception simultaneous operation is performed, such as the time of the packet communication, the transmission system is disconnected from the antenna at the timing when there is no transmission signal, so that the transmission system and the reception system are separated, and the degradation of the reception sensitivity can be suppressed, and as compared with the case where the transmission system and the reception system are connected, for example, the reception sensitivity can be improved by about 1 dB.

### Fourth Embodiment

A fourth embodiment shows an example of switching control of an antenna at a timing when there is no reception signal in the structure of the third embodiment.

As described above, in the case where the packet communication is performed in the TDMA system, a transmission system and a reception system are made to operate at the same time. Especially, in the case where full slot packet communication to transmit packet data by using all usable time slots is performed, a transmission slot and a reception slot temporally overlap with each other, and a transmission/reception simultaneous operation state occurs. At this time, the switches 41 and 42 of the antenna switching unit 31 are connected, so that there occurs a state in which the antenna sharing unit including the transmission side filter 12 and the reception side filter 14 is connected to the antenna 11, and both the transmission system and the reception system are connected to the antenna 11 through the antenna sharing unit.

In the case where the transmission/reception simultaneous operation as stated above is performed, when the antenna sharing unit is merely provided, there occurs a state where the reception system and the transmission system are always connected, and accordingly, a sift occurs in the output impedance of the transmission system by the influence of the input impedance of the reception system, and there is a fear that the transmission distortion characteristics are degraded.

Then, in this embodiment, also at the time of the transmission/reception simultaneous operation such as the time of the packet communication, for example, at the time when full slot reception is not performed, there is a timing when a reception signal does not exist, and therefore, in the period in which only such a transmission processing is performed, the reception system is made unconnected by the antenna switching unit 31, and the transmission system and the reception system are separated. Specifically, in a period of a timing when there is no reception signal, a switching control signal is sent to the antenna switching unit 31 from the switching control part 32, and the switch 42 of the antenna switching unit 31 is made unconnected. By this, the transmission system and the reception system can be separated, and the degradation of transmission distortion characteristics in the period in which there is no reception signal is prevented.

Besides, as shown in Fig. 3, similarly to the second embodiment, at the timing when there is no reception signal and only the transmission processing is performed, and at the control timing in the period T2 in which there is no transmission information in the transmission signal, the switch 42 of the antenna switching unit 31 is opened, and the reception system is made unconnected. By this, it becomes possible to prevent the corruption of the transmission information due to instantaneous impedance variation occurring at the switching timing of the antenna.

As stated above, in this embodiment, similarly to the second embodiment, at the time when the transmission/reception simultaneous operation is performed, such as the time of the packet communication, the reception system is disconnected from the antenna at the timing when there is no reception signal, so that the transmission system and the reception system are separated, and the degradation of transmission distortion characteristics can be suppressed. As compared with the case where the transmission system and the reception system are connected, for example, adjacent channel leakage power can be improved by about 0.5 dB.

Although the Invention has been described in detail with reference to the specific embodiments, it is apparent for one of ordinary skill in the art that various changes and modifications can be made without departing the spirit and scope of the present invention.

This application is based on Japanese Patent Application No, 2002-124366 filed on April 25, 2002, and the contents thereof are incorporated herein by reference.

### INDUSTRIAL APPLICABILITY

As described above, according to the present invention, in the mobile communication apparatus being able to perform the transmission/reception simultaneous operation, in the case where transmission/reception is performed by the packet communication or the like, there are obtained effects that the degradation of reception sensitivity at the timing when there is no transmission signal is prevented, and the reception sensitivity can be improved.

Besides, in the mobile communication apparatus being able to perform the transmission/reception simultaneous operation, in the case where transmission/reception is performed by the packet communication or the like, there are obtained effects that the degradation of transmission distortion characteristics at the timing when there is no reception signal is prevented, and the transmission distortion characteristics can be improved.

## Claims

1. A mobile communication apparatus, including a transmission system for processing a transmission signal, a reception system for processing a reception signal, and an antenna connected to the transmission system and the reception system, and allowing to perform a transmission/reception simultaneous operation, the mobile communication apparatus, comprising:
an antenna switch, which disconnects the transmission system from the antenna during a period when only a reception is performed in a case that the transmission/reception simultaneous operation is performed by the transmission system and the reception system.

2. A mobile communication apparatus, including a transmission system for processing a transmission signal, a reception system for processing a reception signal, and an antenna connected to the transmission system and the reception system, and allowing to perform a transmission/reception simultaneous operation, the mobile communication apparatus, comprising:
an antenna switch, which disconnects the reception system from the antenna during a period when only a transmission is performed in a case that the transmission/reception simultaneous operation is performed by the transmission system and the reception system.

3. The mobile communication apparatus according to claim 1, wherein the antenna switch includes:
a first switch, which connects the antenna to the transmission system in a case that a transmission operation is performed;
a second switch, which connects the antenna to a filter constituting a reception side antenna sharing unit in the reception system in a case that a reception operation is performed and in the case that the transmission/reception operation is performed; and
a third switch, which connects a filter constituting a transmission side antenna sharing unit between the antenna and the transmission system in the case that the transmission/reception operation is performed; and
wherein the first switch and the third switch are disconnected during the period when only the reception is performed in the case that the transmission/reception simultaneous operation is performed.

4. The mobile communication apparatus according to claim 1, wherein the antenna switch includes:
a first switch, which connects the antenna to a filter constituting a transmission side antenna sharing unit in the transmission system in a case that a transmission operation is performed and in the case that the transmission/reception operation is performed; and
a second switch, which connects the antenna to a filter constituting a reception side antenna sharing unit in the reception system in a case that a reception operation is performed and in the case where the transmission/reception operation is performed; and
wherein the first switch is disconnected during the period when only the reception is performed in the case that the transmission/reception simultaneous operation is performed.

5. The mobile communication apparatus according to claim 2, wherein the antenna switch incudes:
a first switch, which connects the antenna to the transmission system in a case that a transmission operation is performed;
a second switch, which connects the antenna to a filter constituting a reception side antenna sharing unit in the reception system in a case that a reception operation is performed and in the case that the transmission/reception operation is performed; and
a third switch, which connects a filter constituting a transmission side antenna sharing unit between the antenna and the transmission system in the case that the transmission/reception operation is performed; and
wherein the second switch is disconnected during the period when only the transmission is performed in the case that the transmission/reception simultaneous operation is performed.

6. The mobile communication apparatus according to claim 2, wherein the antenna switch includes:
a first switch, which connects the antenna to a filter constituting a transmission side antenna sharing unit in the transmission system in a case that a transmission operation is performed and in the case that the transmission/reception operation is performed; and
a second switch, which connects the antenna to a filter constituting a reception side antenna sharing unit in the reception system in a case that a reception operation is performed and in the case that the transmission/reception operation is performed; and
wherein the second switch is disconnected during the period when only the transmission is performed in the case that the transmission/reception simultaneous operation is performed.
